# EUROPÄISCHE PATENTANMELDUNG

(11) **EP 1 189 043 A1**
(43) Veröffentlichungstag der Anmeldung: **20.03.2002**
(21) Anmeldenummer: 01116465.4
(22) Anmeldetag: 07.07.2001
(51) Int. Cl.: G01G 23/01

(54) **Wägeaufnehmer mit Justiergewicht**

(30) Priorität: 13.09.2000 DE 10045136
(71) Anmelder: SARTORIUS AG, 37075 Göttingen (DE)
(72) Erfinder: Schulze, Werner, 37083 Göttingen (DE); Müller, Michael, 37079 Göttingen (DE); Engelhardt, Herbert, 37186 Moringen (DE)

(57) **Zusammenfassung**

Für einen Wägeaufnehmer mit einem gehäusefesten Teil (1), mit einem Lastaufnehmer (2), der durch zwei Lenker (3, 4) beweglich mit dem gehäusefesten Teil verbunden ist, mit mindestens einem Übersetzungshebel (7, 11, 17), der die auf den Lastaufnehmer einwirkende Belastung zu einem Messwandler (18) überträgt, und mit einem eingebauten Justiergewicht (30) zum Überprüfen und/oder Nachjustieren der Empfindlichkeit des Wägeaufnehmers, wird vorgeschlagen, dass sich das Justiergewicht (30) auf den jeweils einen Hebelarm von zwei parallelgeschalteten Brückenhebeln (11, 21) abstützt und dass mindestens einer der beiden Brückenhebel (11, 21) mit dem/einem der Übersetzungshebel (11) identisch ist.

Dies ergibt eine einfache und flachbauende Auflagemöglichkeit für das Justiergewicht, die unempfindlich gegenüber Schwankungen des Auflageortes ist.

Die wesentlichen Teile des Wageaufnehmers können monolithisch aus einem einzigen Metallblock herausgearbeitet werden.

## Beschreibung

Die Erfindung bezieht sich auf einen Wägeaufnehmer mit einem gehäusefesten Teil, mit einem Lastaufnehmer, der durch zwei Lenker beweglich mit dem gehäusefesten Teil verbunden ist, mit mindestens einem Übersetzungshebel, der die auf den Lastaufnehmer einwirkende Belastung zu einem Messwandler überträgt, und mit einem eingebauten Justiergewicht zum Überprüfen und/oder Nachjustieren der Empfindlichkeit des Wägeaufnehmers.

Wägeaufnehmer dieser Art sind allgemein bekannt und z. B. in dem DE 91 03 487 U1 beschrieben. Diese Wägeaufnehmer werden vorzugsweise in Waagen hoher Auflösung mit Höchstlasten zwischen 1 kg und 300 kg eingesetzt. Der bzw. die Übersetzungshebel setzt/setzen dabei die am Lastaufnehmer wirkende Belastung auf die geringere, vom Messwandler zu verkraftende Belastung herab. Als Messwandler wird häufig die Spule/Magnet-Kombination einer elektromagnetischen Kraftkompensation benutzt. Es ist jedoch auch der Einsatz anderer Messwandler möglich, wie z. B. schwingende Saiten oder Dehnungsmessstreifen. Das eingebaute Justiergewicht wird zum Kalibrieren bzw. Justieren üblicherweise auf einen der Hebelarme des/eines Übersetzungshebels abgesenkt, wodurch das Justiergewicht wegen des Übersetzungsverhältnisses kleiner und leichter sein kann als bei direkter Einwirkung auf den Lastaufnehmer. Dazu ist es jedoch notwendig, das Justiergewicht sehr reproduzierbar auf den Übersetzungshebel abzusenken, wodurch die dazu eingesetzte Hubvorrichtung aufwendig konstruiert sein muss. Beispielsweise muss bei zylinderförmigen Justiergewichten durch besondere Maßnahmen eine Drehung des Justiergewichtes verhindert werden, da schon die üblichen geringen Materialinhomogenitäten dazu führen, dass der Schwerpunkt des Justiergewichtes nicht genau auf dessen geometrischer Symmetrieachse liegt. Eine Drehung des Justiergewichtes würde dann zu einer Hebelarmänderung und dadurch zu einem anderen Drehmoment am Übersetzungshebel führen.

Um diesen Nachteil zu vermeiden, wurde in der DE 196 05 087 A1 bereits vorgeschlagen, eine zusätzliche Lenkerparallelführung für das Justiergewicht vorzusehen und die Kraft des Justiergewichtes über ein vertikales Koppelelement in den bzw. in einen der Übersetzungshebel einzuleiten. Diese Lösung ist jedoch durch die beiden zusätzlichen Lenker mit ihren Gelenkstellen und durch das zusätzliche Koppelelement aufwendig in der Herstellung; zusätzlich erfordert die Lenkerparallelführung eine gewisse Mindestbauhöhe, wodurch sich die Gesamthöhe des Wägeaufnehmers tendenziell vergrößert.

Aufgabe der Erfindung ist es daher, einen Wägeaufnehmer der eingangs genannten Art anzugeben, bei dem geringe Ungenauigkeiten des Auflageortes des Justiergewichtes nicht in die Genauigkeit der Justierung bzw. Kalibrierung eingehen, der mit wenig zusätzlichen Bauelementen auskommt und eine flache Bauweise erlaubt.

Erfindungsgemäß wird dies dadurch erreicht, dass sich das Justiergewicht auf dem jeweils einem Hebelarm von zwei parallelgeschalteten Brückenhebeln abstützt und dass mindestens einer der beiden Brückenhebel mit dem/einem der Übersetzungshebel identisch ist.

Durch die Brückenkonstruktion ist die Lage des Justiergewichtes beliebig und es wird eine flache Bauweise erreicht, da die beiden Brückenhebel nebeneinander angeordnet sind. Durch die Benutzung des vorhandenen Übersetzungshebels wird nur der zweite Brückenhebel als zusätzliches Bauelement benötigt.

Vorteilhafte Ausgestaltung ergeben sich aus den Unteransprüchen.

Die Erfindung wird im Folgenden anhand der schematischen Figuren beschrieben. Dabei zeigt:
Figur 1 eine erste Ausgestaltung des Wägeaufnehmers in Seitenansicht,
Figur 2 eine zweite Ausgestaltung des Wägeaufnehmers in Seitenansicht und
Figur 3 eine Rückansicht auf die Ausgestaltung gemäß Figur 2.

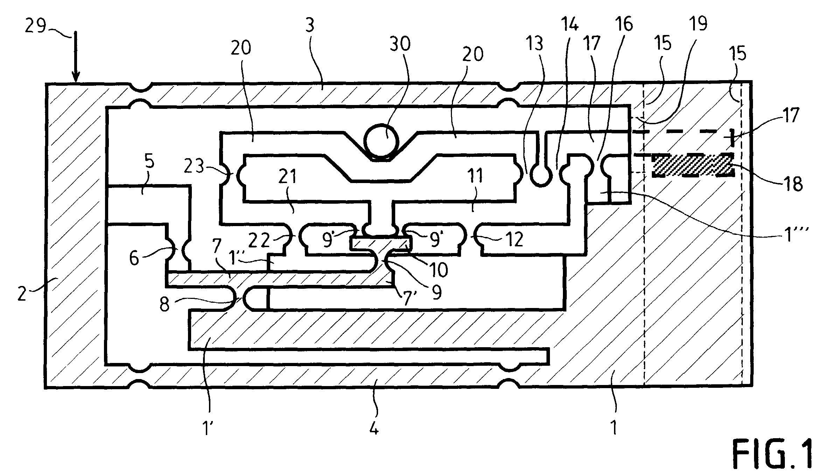

Der Wägeaufnehmer, der in Figur 1 in Seitenansicht gezeigt ist, besteht im Wesentlichen aus einem einzigen Metallblock, aus dem die einzelnen Bauteile durch Sägen, Fräsen, Drahterodieren und/oder Laserschneiden herausgearbeitet sind. Am gehäusefesten Bereich 1 ist über einen oberen Lenker 3 und einen unteren Lenker 4 ein Lastaufnehmer 2 in senkrechter Richtung beweglich geführt. Die auf den Lastaufnehmer 2 einwirkende Belastung - beispielsweise von der Waagschale einer Waage - ist nur durch den Pfeil 29 angedeutet, sie wird von einem Vorsprung 5 am Lastaufnehmer 2 über eine Dünnstelle 6 auf den kurzen Hebelarm eines ersten Übersetzungshebels 7 übertragen. Der Übersetzungshebel 7 ist über eine Dünnstelle 8 an einem Vorsprung 1' des gehäusefesten Bereiches 1 gelagert. Der andere Hebelarm 7' des ersten Übersetzungshebels ist gabelförmig aufgespalten und erstreckt sich auf beiden Seiten eines schmaleren Vorsprunges 1" des gehäusefesten Bereiches 1. In Figur 1 ist dies zeichnerisch dadurch angedeutet, dass alle Teile und Bereiche, die die volle Breite aufweisen, schraffiert sind, während die nicht schraffierten Teile/Bereiche schmaler ausgeführt sind. Bei der Schraffur handelt es sich also gewissermaßen um die Oberflächenriefen des ursprünglichen Metallblockes. Der Bereich 1" ist also schmaler (ca. 50 %) als der restliche gehäusefeste Bereich 1 und 1' und erstreckt sich mittig zwischen dem gabelförmig aufgespalteten zweiten Hebelarm 7' des Übersetzungshebels. Vom Übersetzungshebel 7/7' wird die untersetzte Kraft über ein Koppelelement 10 mit den Dünnstellen 9 und 9' auf den kurzen Hebelarm eines zweiten Übersetzungshebels 11 übertragen. Der Übersetzungshebel 11 ist über eine Dünnstelle 12 am Vorsprung 1" des gehäusefesten Bereiches 1 gelagert. Vom längeren Hebelarm des zweiten Übersetzungshebels 11 wird die noch mal untersetzte Kraft über ein Koppelelement 14 auf den kurzen Hebelarm eines dritten Übersetzungshebels 17 übertragen. Dieser Übersetzungshebel 17 ist an einem Vorsprung 1"' am gehäusefesten Bereich 1 gelagert. Am langen Hebelarm des Übersetzungshebels 17 ist schließlich die Spule 18 der elektromagnetischen Kraftkompensation befestigt. Diese Spule 18 befindet sich im Luftspalt eines nicht dargestellten Permanentmagneten, der in einer vertikalen Bohrung 15 im gehäusefesten Teil 1 befestigt ist. Der Freiraum für den längeren Hebelarm des Übersetzungshebels 17 ist in Figur 1 nur durch die gestrichelt gezeichneten Begrenzungslinien 19 erkennbar.

Die im Vorstehenden beschriebenen Teile des Wägeaufnehmers sind allgemein bekannt und daher nur kurz erläutert. Auch die zeichnerische Darstellung ist der Übersichtlichkeit halber auf das Wesentliche beschränkt. Beispielsweise sind die Dünnstellen 6, 9 und 9' und auch die weiter unten beschriebenen Dünnstellen nur einfach gezeichnet, obwohl sie zwei benachbarte Dünnstellen enthalten, um neben der Drehbeweglichkeit auch den Ausgleich von geringen seitlichen Bewegungen der Übersetzungshebel und des Lastaufnehmers gegeneinander sicherzustellen. Dies ist jedoch jedem Fachmann geläufig. Auch wurde auf die zeichnerische Darstellung von eventuellen Bearbeitungsradien in den Ecken der Einfachheit halber verzichtet.

Der erfindungsgemäße Wägeaufnehmer weist nun zusätzlich einen Brückenhebel 21 auf, der über eine Dünnstelle 22 am vorkragenden Bereich 1" des gehäusefesten Bereiches 1 gelagert ist. Dieser Brückenhebel 21 trägt über die Dünnstelle 23 die eine Seite einer Brückentraverse 20, die sich an ihrer anderen Seite über eine Dünnstelle 13 auf dem schon beschriebenen Übersetzungshebel 11 abstützt. Die beiden Hebel 11 und 21 bilden also die beiden parallel geschalteten Brückenhebel einer üblichen Wägebrücke, wobei die Brückenhebel an ihrem einen Hebelarm die Brückentraverse 20 tragen und mit ihrem anderen Hebelarm mit dem Koppelelement 10 verbunden sind und dort die aufsummierten Kräfte weiterleiten. Auf die Brückentraverse 20 kann das Justiergewicht 30 abgesenkt werden. Durch die beschriebene Brückenanordnung kann der Auflageort des Justiergewichtes 30 variieren, ohne dass die am Koppelelement 10 wirkende Kraft dadurch beeinflusst wird.

Die in Figur 1 gezeichnete Lage des Justiergewichtes 30 ist die Kalibrier- bzw. Justierlage. Im normalen Wägebetrieb ist das Justiergewicht 30 abgehoben und wird gehäusefest fixiert. Die dazu notwendige Hubvorrichtung ist in Figur 1 der Übersichtlichkeit halber nicht eingezeichnet. Ist das zylinderförmige Justiergewicht 30 länger als der Wägeaufnehmer breit ist (senkrecht zur Zeichenebene von Figur 1), so kann die Hubvorrichtung z. B. auf beiden Seiten des Wägeaufnehmers gehäusefest angeordnet sein.

Die einzelnen Hebelarme der Übersetzungshebel sind in Figur 1 nicht maßstäblich gezeichnet. Der Übersetzungshebel 7 weist beispielsweise ein Übersetzungsverhältnis von 1 : 5 auf, sodass eine Höchstbelastung am Lastaufnehmer 2 von z. B. 500 N (entspricht 50 kg) auf eine Kraft von 100 N an der Dünnstelle 9 reduziert wird. Die beiden Hebel 11 und 21 weisen beispielsweise ein Übersetzungsverhältnis von 1 : 10 auf, sodass an der Dünnstelle 14 die Kraft nur noch 10 N beträgt. Weist auch der Übersetzungshebel 17 ein Übersetzungsverhältnis von 1 : 10 auf, so muss die Spule 18 der elektromagnetischen Kraftkompensation nur eine Kraft von 1 N aufbringen, was leicht möglich ist. Gleichzeitig kann man mit einem Justiergewicht 30 von 1 kg an den Dünnstellen 13 und 23 die notwendige Kraft von 10 N aufbringen, um eine Belastung des Wägeaufnehmers mit Höchstlast zu simulieren. (Der geringe Hebelarmunterschied zwischen den beiden Dünnstellen 13 und 14 ist dabei in diesem Beispiel vernachlässigt; es soll ja nur die Größenordnung gezeigt werden.)

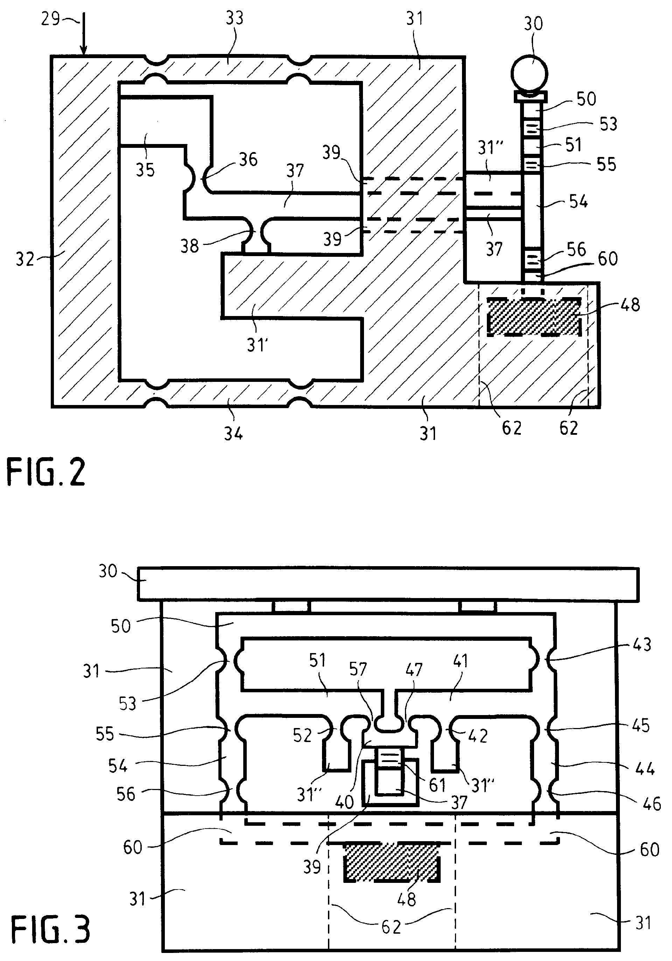

Eine zweite Ausgestaltung des Wägeaufnehmers ist in den Figuren 2 und 3 gezeigt; Figur 2 ist eine Seitenansicht, Figur 3 ist eine Rückansicht, also eine Ansicht auf die in Figur 2 rechte Endfläche. Der Wägeaufnehmer besteht aus einem gehäusefesten Bereich 31, zwei Lenkern 33 und 34, die einen Lastaufnehmer 32 in senkrechter Richtung beweglich mit dem gehäusefesten Bereich 31 verbinden, und einem ersten Übersetzungshebel 37. Der Übersetzungshebel 37 ist über die Dünnstelle 38 an einem Vorsprung 31' des gehäusefesten Bereiches 31 gelagert, sein langer Hebelarm erstreckt sich durch einen Durchbruch 39 im gehäusefesten Bereich 1 hindurch. ― In Figur 2 sind die Bereiche, die die volle Breite aufweisen, wieder durch Schraffur gekennzeichnet, während die schmaleren Bereiche ohne Schraffur dargestellt sind.

Außerdem weist der Wägeaufnehmer zwei weitere parallel geschaltete Übersetzungshebel 41 und 51 auf, die am besten in Figur 3 erkennbar sind. Diese beiden Übersetzungshebel sind über die Dünnstellen 42 bzw. 52 an zwei Vorsprüngen 31 "des gehäusefesten Bereiches 31 gelagert. Die Kraftübertragung vom ersten Übersetzungshebel 37 erfolgt durch ein Koppelelement 40, dessen Ausgleichsgelenke zum Ausgleich der verschiedenen Bewegungen der Übersetzungshebel 37, 41 und 51 durch die Dünnstellen 47, 57 und 61 wieder nur ganz schematisch angedeutet sind. Die untersetzte Kraft wird dann über zwei Koppelelemente 44 und 54 mit den Dünnstellen 45 und 46 bzw. 55 und 56 auf eine Quertraverse 60 übertragen, an der wiederum die Spule 48 der elektromagnetischen Kraftkompensation befestigt ist. Der zugehörige Permanentmagnet ist nicht eingezeichnet, nur die Bohrung 62 zu seiner Aufnahme ist angedeutet.

Die Kraftübertragung vom Lastaufnehmer 32 zur Spule 48 als Teil des Messwandlers erfolgt also über den ersten Übersetzungshebel 37 und über die beiden parallelgeschalteten Übersetzungshebel 41 und 51.

Für die Ankopplung des Justiergewichtes 30 sind dann nur noch eine Quertraverse 50 und zwei Koppelelemente 43 und 53, die die Kraft in die beiden Brückenhebel/Übersetzungshebel 41 und 51 einleiten, notwendig. Die beiden Übersetzungshebel 41 und 51 sind also sowohl die Brückenhebel für die Quertraverse 50 und das Justiergewicht 30 als auch Übersetzungshebel für die Kraftübertragung vom Lastaufnehmer 32 zur Spule 48 der elektromagnetischen Kraftkompensation.

Die Drehachse des Übersetzungshebels 37 steht in der Ausgestaltung gemäß Figur 2 und 3 senkrecht auf den Drehachsen der Hebel 41 und 51. Damit kann der Übersetzungshebel 37 durch Bearbeitung von der Seite her aus dem ursprünglichen Metallblock herausgearbeitet werden, während die beiden Hebel 41 und 51 durch Bearbeitung von hinten her herausgearbeitet werden.

In Figur 3 sind an den Übersetzungshebeln 41 und 51 die Hebelarme für die Kraftübertragung zur Spule 48 und für die Kraftübertragung zum Justiergewicht 30 gleich lang eingezeichnet. Dadurch muss das Justiergewicht 30 die gleiche Kraft auf die Übersetzungshebel 41 und 51 ausüben wie die Spule 48 der elektromagnetischen Kraftkompensation erzeugt. Es ist jedoch auch möglich, zwischen Justiergewicht 30 und Spule 48 ein Übersetzungsverhältnis vorzusehen. Dazu müssen nur die Koppelelemente 44/45/46 und 54/55/56 weiter nach außen verlegt werden (also an einem größeren Hebelarm an den Übersetzungshebeln 41 und 51 angreifen) und/oder die Koppelelemente 43 und 53 müssen weiter nach innen verlegt werden (also an einem kürzeren Hebelarm an den Übersetzungshebeln 41 und 51 angreifen.)

## Patentansprüche

1. Wägeaufnehmer mit einem gehäusefesten Teil (1, 31), mit einem Lastaufnehmer (2, 32), der durch zwei Lenker (3, 4; 33, 34) beweglich mit dem gehäusefesten Teil verbunden ist, mit mindestens einem Übersetzungshebel (7, 11, 17, 37, 41, 51), der die auf den Lastaufnehmer einwirkende Belastung zu einem Messwandler (18, 48) überträgt, und mit einem eingebauten Justiergewicht (30) zum Überprüfen und/oder Nachjustieren der Empfindlichkeit des Wägeaufnehmers, **dadurch gekennzeichnet, dass** sich das Justiergewicht (30) auf dem jeweils einen Hebelarm von zwei parallelgeschalteten Brückenhebeln (11, 21; 41, 51) abstützt und dass mindestens einer der beiden Brückenhebel (11, 21; 41, 51) mit dem/einem der Übersetzungshebel (11, 41, 51) identisch ist.

2. Wägeaufnehmer nach Anspruch 1, **dadurch gekennzeichnet, dass** der gehäusefeste Teil (1, 31), der Lastaufnehmer (2, 32), die beiden Lenker (3, 4; 33, 34), der/die Übersetzungshebel (7, 11, 17, 41, 51), die Brückenhebel (11, 21, 41, 51) und die zugehörigen Lagerelemente (8, 12, 16, 22, 38, 42, 52), Koppelelemente (10, 40, 44, 54) und Dünnstellen (6, 9, 9', 13, 14, 23, 36, 45, 46, 47, 53, 55, 56, 57, 61) aus einem einzigen Metallblock herausgearbeitet sind.

3. Wägeaufnehmer nach einem der Ansprüche 1 oder 2 mit mindestens zwei Übersetzungshebeln (7, 11, 17), **dadurch gekennzeichnet, dass** die Drehachsen aller Übersetzungshebel (7, 11, 17) parallel zueinander sind.

4. Wägeaufnehmer nach einem der Ansprüche 1 oder 2 mit mindestens zwei Übersetzungshebeln (37, 41, 51), **dadurch gekennzeichnet, dass** die Drehachse(n) mindestens eines Übersetzungshebels (41, 51) senkrecht zur Richtung der Drehachse(n) der/des restlichen Übersetzungshebels (37) ist/sind.
